(19) Europäisches Patentamt
European Patent Office
Office européen des brevets

(11) **EP 2 814 164 B1**

(12) **EUROPEAN PATENT SPECIFICATION**

(45) Date of publication and mention of the grant of the patent:
**16.08.2017 Bulletin 2017/33**

(51) Int Cl.:
**H02M 7/23** *(2006.01)*   **H02M 1/12** *(2006.01)*
**H02M 5/458** *(2006.01)*

(21) Application number: **14171958.3**

(22) Date of filing: **11.06.2014**

(54) **A multiphase ac power converter and method for controlling a multiphase ac power converter**

Mehrphasiger Wechselstromleistungswandler und Verfahren zur Steuerung eines mehrphasigen Wechselstromleistungswandlers

Convertisseur de courant alternatif multiphase et procédé de commande d'un convertisseur de courant alternatif multiphase

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2013 CH 11092013**

(43) Date of publication of application:
**17.12.2014 Bulletin 2014/51**

(73) Proprietor: **AIT Austrian Institute of Technology GmbH**
**1220 Wien (AT)**

(72) Inventors:
• **Kolar, Johann W.**
**8044 Zürich (CH)**

• **Cortes Estay, Patricio**
**8047 Zürich (CH)**
• **Boillat, David O.**
**3013 Bern (CH)**

(74) Representative: **Frei Patent Attorneys**
**Frei Patentanwaltsbüro AG**
**Postfach 1771**
**8032 Zürich (CH)**

(56) References cited:
**JP-A- 2001 314 081     JP-A- 2010 288 381**
**KR-B1- 100 875 530     US-A1- 2005 140 142**

## Description

High-performance AC power sources are a very important tool for testing new power electronics converters supplied from single-phase or three-phase AC mains. They allow to verify the behavior of the new equipment under different operating conditions such as the presence of harmonics in the supply voltage, and grid failures like loss of a phase of a three-phase supply [1]-[3]. Accordingly, an important requirement for the AC source is the generation of balanced or unbalanced voltages, even DC, as well as operation with unbalanced or nonlinear loads, including single-phase loads. In case of loads with a ground connection, the AC source must ensure that no current is circulating through the ground loop occurring through the ground connection of the mains star point. It is also highly desirable to allow the parallel connection of two or more AC sources, using them as modules in order to increase the power rating of the system. Any currents circulating between the modules must be avoided.

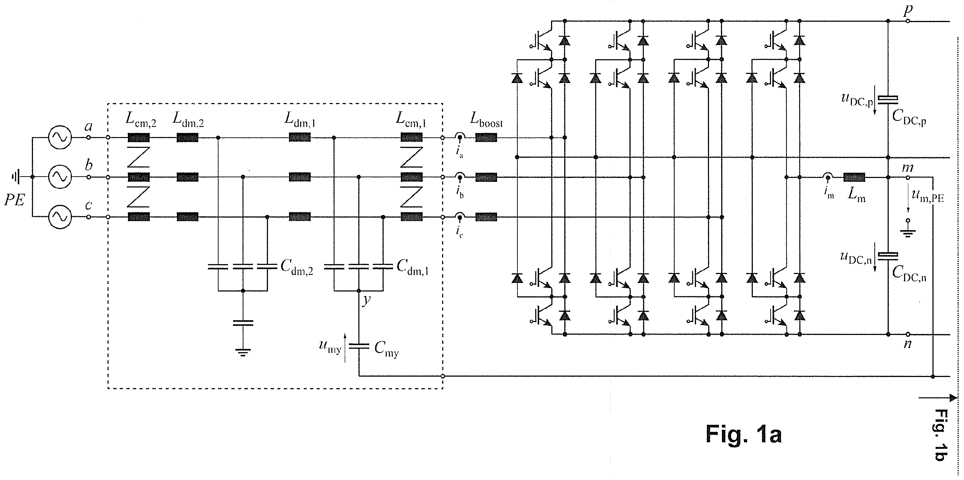

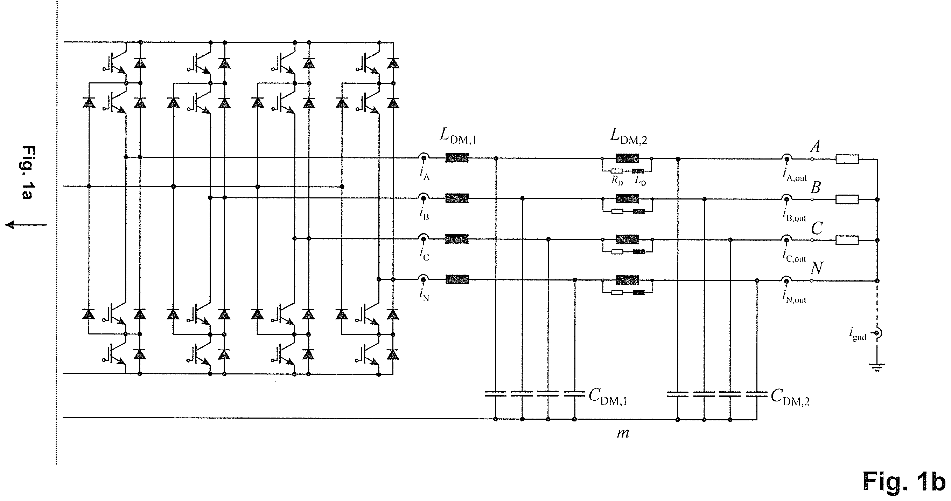

In order to handle unbalanced or nonlinear loads, a fourth leg is included in the output stage providing a neutral point connection. In addition, the use of a fourth leg allows to increase the output voltage range and to reduce the DC-link capacitors, in comparison to the direct connection of the neutral point of the load to the midpoint of the DC-link [4] (cf. **Fig. 1**). Modeling and control of 4-leg systems have been studied in the literature and several modulation and control schemes have been proposed.

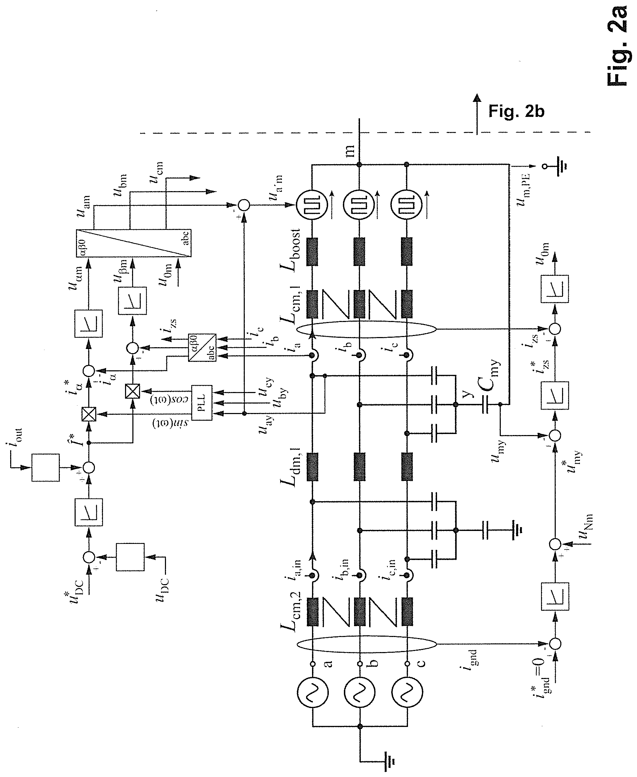

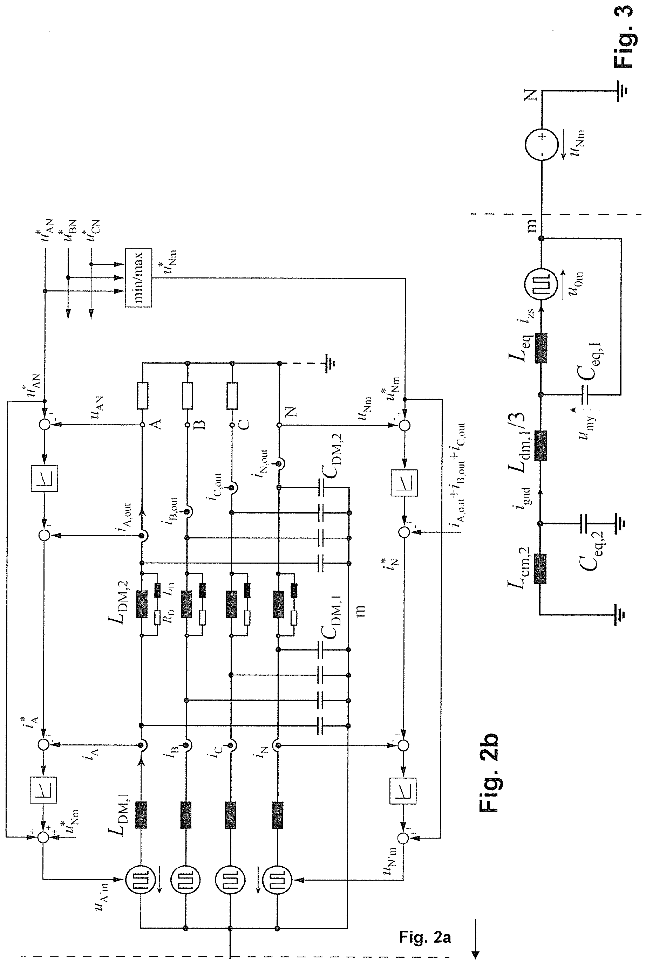

Most of the control schemes consider a coordinates transformation using a static or rotating reference frame and an equivalent circuit, representing the 4-leg system as three single-phase systems [4]-[7], as shown in **Fig. 2**. The use of carrier-based pulse width modulation (PWM) [8], as well as space vector modulation (SVM) using a three-dimensional representation of the voltage vectors have been proposed in the literature [4], [9], [10] (cf. **Fig. 3**). All these approaches consider three-phase sinusoidal voltages and are not suitable or easily applicable if the reference voltages can have any programmed waveform, including DC.

Considering the AC source as a module, three types of circulating currents can be identified: zero sequence currents, module ground currents and, for parallel connected modules, inter module circulating currents. **Zero sequence currents** circulate inside the power converter and can be controlled in order to provide some additional advantage in the operation of the converter, e.g. maximize the output modulation range of the inverter. **Module ground currents** can appear when supplying voltage to loads with connection to ground, as the star point of the mains supplying the AC source is tied to ground. This effect is more likely to appear with unbalanced loads, nonlinear loads and active loads. Accordingly, the design of the AC source circuit and control scheme must consider the mitigation of the module ground currents, providing safe operation with ground connected loads. The inclusion of an isolation stage could prevent the appearance of circulating currents but it requires a higher implementation effort. **Inter module currents** circulate between parallel connected AC source modules, and can generate uneven power distribution between the modules and distortion of the input currents. This problem has been discussed in the literature considering the parallel connection of voltage source rectifiers [12]-[14], current source rectifiers [15] and voltage source inverters [16], [17]. The control scheme of each AC source module must consider the regulation of the zero-sequence currents at the input side in order to have a balanced operation of the modules without inter module currents. At the output side, a master-slave configuration of the modules can be implemented in order to guarantee equal sharing of the load current.

US 2005/140142 A1 discloses a three phase power converter in which the star points of an input filter and of an output filter, the midpoint of a DC link and the midpoint of an additional bridge leg all are connected to a common neutral point.

There is a need for a control scheme for a high-performance three-phase AC power source with a four-leg inverter output stage which reduces or eliminates a current circulating through the ground loop occurring through the ground connection of a mains star point. There further is a need for a control scheme that allows the parallel connection of two or more AC sources, using them as modules in order to increase the power rating of the system, and that reduces or eliminates currents circulating between the modules.

It is therefore an object of the invention to create a control scheme of the type mentioned initially which satisfies one or more of the abovementioned needs.

For this, a **method is provided for controlling** a multiphase AC power converter, wherein the power converter comprises

- a multiphase primary stage for exchanging electrical energy between a multiphase voltage source and a DC link;
- an input filter arranged between the primary stage and input terminals connecting the power converter to the multiphase voltage source;
- a multiphase secondary stage for exchanging electrical energy between the DC link and phases of a multiphase load, this secondary stage comprising one bridge leg for each of the phases of the load and an additional bridge leg for a neutral point of the load;
- the input filter comprising an input filter star point connected to a midpoint of the DC link via a connection capacitance ($C_{my}$).

The method comprises the following steps for controlling a ground current ($i_{gnd}$) flowing into the power converter:

- an outer controller controlling the ground current ($i_{gnd}$) to a reference value ($i^*_{gnd}$), typically zero, by generating a reference value ($u^*_{my}$) for a voltage across the connection capacitance ($C_{my}$);
- an inner controller controlling the voltage ($u_{my}$) across the connection capacitance ($C_{my}$) to its reference value ($u^*_{my}$) by generating a reference value ($i^*_{zs}$) for a zero sequence current flowing through the connection capacitance ($C_{my}$);
- a zero sequence current controller controlling the zero sequence current ($i_{zs}$) to its reference value ($i^*_{zs}$).

In an embodiment, the power converter comprises an output filter arranged between the secondary stage and output terminals that connect the power converter to the load, including the neutral point of the load, and wherein a star point of the output filter is connected to the midpoint of the DC link; the method comprising the step of

- a feedforward circuit adding a potential ($U_{Nm}$) of the secondary stage neutral point to the reference value generated by the outer controller before inputting it as a reference value ($u^*_{my}$) to the inner controller.

In an embodiment, the voltage source is a three phase system and the load comprises three phase connections and one neutral point connection to the power to converter.

The **multiphase AC power converter,** according to one embodiment, comprises

- a multiphase primary stage for exchanging electrical energy between a multiphase voltage source and a DC link;
- an input filter arranged between the primary stage and input terminals connecting the power converter to the multiphase voltage source;
- a multiphase secondary stage for exchanging electrical energy between the DC link and phases of a multiphase load, this secondary stage comprising one bridge leg for each of the phases of the load and an additional bridge leg for a neutral point of the load;
- the input filter comprising an input filter star point connected to a midpoint of the DC link via a connection capacitance ($C_{my}$);
- an output filter arranged between the secondary stage and output terminals that connect the power converter to the load, including the neutral point of the load, and
- wherein a star point of the output filter is connected to the midpoint of the DC link.

In an embodiment, the multiphase AC power converter the output filter, including filter elements for the neutral point, is a symmetric filter.

In an embodiment, the multiphase AC power converter comprises a controller for controlling ground loop currents, wherein the controller comprises the following units implemented in hard- and/or software for controlling a ground current ($i_{gnd}$) flowing into the power converter:

- an outer controller arranged to control the ground current ($i_{gnd}$) to a reference value ($i^*_{gnd}$) by generating a reference value ($u^*_{my}$) for a voltage across the connection capacitance ($C_{my}$);
- an inner controller arranged to control the voltage ($u_{my}$) across the connection capacitance ($C_{my}$) to its reference value ($u^*_{my}$) by generating a reference value ($i^*_{zs}$) for a zero sequence current flowing into the connection capacitance ($C_{my}$);
- a zero sequence current controller arranged to control the zero sequence current ($i_{zs}$) to its reference value ($i^*_{zs}$).

In an embodiment, the multiphase AC power converter comprises a controller for the potential ($U_{Nm}$) at the neutral point of the secondary stage that maximises the voltage range for the other three output phases.

The output stage or secondary stage, for example a four-leg inverter, can use a phase-oriented control scheme, allowing independent operation of each phase of the power source with any type of voltage references and any type of load. The output stage neutral potential $u_{Nm}$ can be controlled for maximum modulation range in case of floating load and controlled to zero for grounded load. The control scheme of the input PWM rectifier considers the control of the zero sequence voltages in order to prevent the appearance of a module ground current and of inter module currents, allowing the operation with ground connected loads and the parallel connection of several AC power source modules.

In an embodiment, the multiphase AC power converter comprises a feedforward circuit arranged to add a potential ($U_{Nm}$) of the neutral point of the secondary stage to the reference value generated by the outer controller before inputting it as a reference value ($u^*_{my}$) to the inner controller.

In summary, a control scheme for a high-performance three-phase (or multi-phase) AC power source is presented. The four-leg inverter output stage uses three bridge legs to generate the phase output voltages with reference to the neutral point potential, which is defined by the fourth bridge leg. The inverter is controlled using a phase-oriented control in order to achieve precise control of each output phase with unbalanced voltages and any kind of load. The neutral potential of the four output stage is controlled for maximum modulation range in case of floating load and controlled to zero for grounded load. The control scheme for the input PWM rectifier stage considers the control of the zero sequence voltage in order to prevent the appearance of circulating currents through the ground loop when the load star point is connected to ground. The control of the circulating currents also allows the safe parallel connection of two or more AC sources.

Simulation results under balanced and unbalanced conditions demonstrate the performance of the AC source in terms of output voltage control and prevention of circulating ground currents.

The examples below and the explanations above mention three phase systems but apply mutatis mutandis to multi-phase systems.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which:

Figure 1a and 1b     together show the topology of a multiphase converter;
Figure 2a and 2b     together show measurement and control elements:
Figure 3     show a ground loop current equivalent circuit;
Figure 4     show two converters connected in parallel; and
Figures 5-8     trajectories of voltages and currents for different loads.

In principle, identical parts are provided with the same reference symbols in the figures.

The power circuit of a converter operating as an AC source considered in this work is shown in **Fig. 1.** The power converter is based on the three-level neutral point clamped (NPC) topology. At the input side, a three-phase voltage source rectifier provides controlled DC-link voltages and sinusoidal input currents. An input filter is included and it is assumed that the neutral point of the grid is connected to ground. The star point of the filter capacitors $y$ is connected to the midpoint of the DC-link $m$ through another capacitor $C_{my}$, allowing the control of the midpoint potential with respect to ground. The output side has four legs with LC filters providing three controlled output voltages at the phase terminals $A$, $B$ and $C$ and at the neutral terminal $N$. The output voltages are defined with respect to the neutral terminal $N$ and can be controlled independently. The control of the fourth leg is utilized in order to maximize the output voltage range of the three output phases or to be zero in case of loads connected to ground (assuming that the modulation of the input stage is without zero sequence voltage). The load can be balanced or unbalanced, linear or nonlinear, and with or without connection to ground.

A possible embodiment for the control scheme for the output stage is shown in Fig. 2. Each phase is controlled independently using a cascaded structure with an inner current control loop and an outer voltage control loop, optionally including feedforward loops of the load phase currents and reference voltages. The reference for the phase N can be calculated in order to maximize the voltage range of the other three output phases:

$$u^*_{Nm} = -\frac{\min(u^*_{AN}, u^*_{BN}, u^*_{CN}) + \max(u^*_{AN}, u^*_{BN}, u^*_{CN})}{2}.$$

In case of ground connection of phase N, the reference voltage is set to zero, i.e. $u^*_{Nm}$ =0.

As shown in **Fig. 2,** a PI controller regulates the ground current $i_{gnd}$ with a reference value equal to zero. The output of this controller and a feed forward loop of the output neutral voltage $u_{Nm}$ generate the reference voltage $u^*_{my}$. The second PI controller regulates the capacitor voltage $u_{my}$ and its output is the reference value for the zero sequence current controller. This third controller provides a fast control of the zero sequence current $i_{zs}$ and generates the reference for the zero sequence voltage $u_{0m}$.

In the input stage, a PI controller regulates the total DC-link voltage $u_{DC}$ and generates the reference for the input phase current amplitude $\hat{I}^*$, including a feed forward loop of the output current $i_{out}$, which can be obtained from the output stage controller variables:

$$i_{out} = \frac{u^*_{AN} i_{A,out} + u^*_{BN} i_{B,out} + u^*_{CN} i_{C,out}}{u_{DC}}.$$

A moving average filter is used for the dc-link voltage $u_{DC}$ and load current $i_{out}$ in order to avoid distortions in the input currents due to periodic variations of the dc-link voltage generated by unbalanced operation of the output stage, e.g.

with a single phase load.

For another explanation of the control scheme for the ground current, consider **Fig. 3**: The input side of the AC source is modeled in terms of the zero sequence components of the converter voltages and currents, and the common mode equivalent circuit of the input filter. The output stage (to the right of midpoint m) considers only the elements that affect the behavior of the ground current, i.e. the voltage at the neutral point N, with respect to the midpoint m of the DC-link, and the ground connection of the load. When a grounded load is connected at the output terminals, the neutral point output voltage $u_{Nm}$ defines the potential of the midpoint m with respect to ground. For this reason the reference output voltage $u^*_{Nm}$ is set to zero for operation with a grounded load. As it can be observed in **Fig. 2**, the ground current can be controlled by means of the voltage $u_{my}$. The output voltage $u_{Nm}$ can be considered to be a disturbance in the control loop. The reference for the voltage $u_{my}$ can be modified by the zero sequence current component $i_{zs}$. This idea corresponds to the cascaded control structure as shown in **Fig. 2**.

The control scheme provides the following advantages:

a) Independent control of each output phase,
b) Operation with any type of output voltage references (not limited to balanced three-phase voltages),
c) Operation with any type of load (balanced/unbalanced, linear/nonlinear, floating/grounded),
d) Prevention of ground circulating currents and inter-module circulating currents.

A control loop for the voltage in the output terminal N is introduced for:

e) Maximization of the output voltage range for floating loads,
f) Prevention of ground circulating currents for grounded loads.

The control of the zero sequence and circulating currents allows the safe operation of two or more AC sources.

The input side control can be implemented using different reference frames for the currents and voltages:

g) Control of the three-phases (abc),
h) Orthogonal coordinates ($\alpha\beta0$),
i) Rotating reference frame (dq0).

The example in **Fig. 2** uses $\alpha\beta0$ coordinates for the current control.

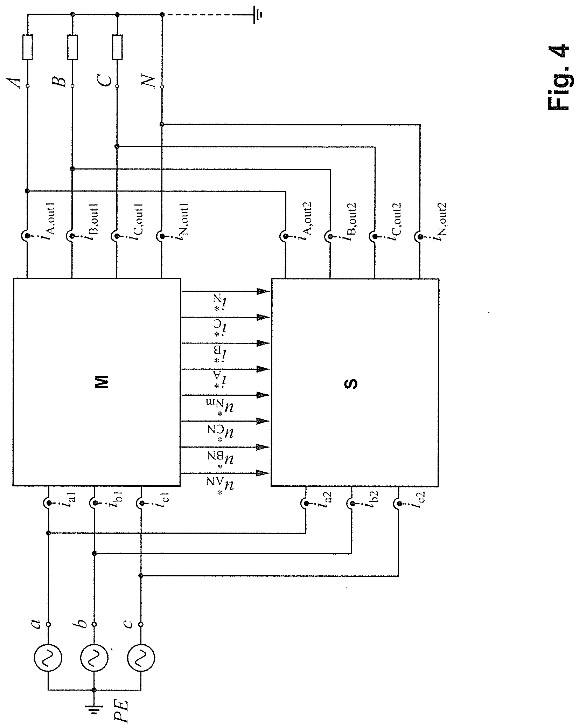

**Fig. 4** shows a parallel connection of two converters or AC sources. When two or more AC sources are connected in parallel, the control scheme of each AC source remains the same at the input side, but a master-slave scheme can be implemented for the output stages. This means that only one AC source performs the control of the output voltages (master) and provides the current references for the other AC sources (slaves). Fig. 4 shows the output voltage and current references being passed from the master module M to the slave module S.

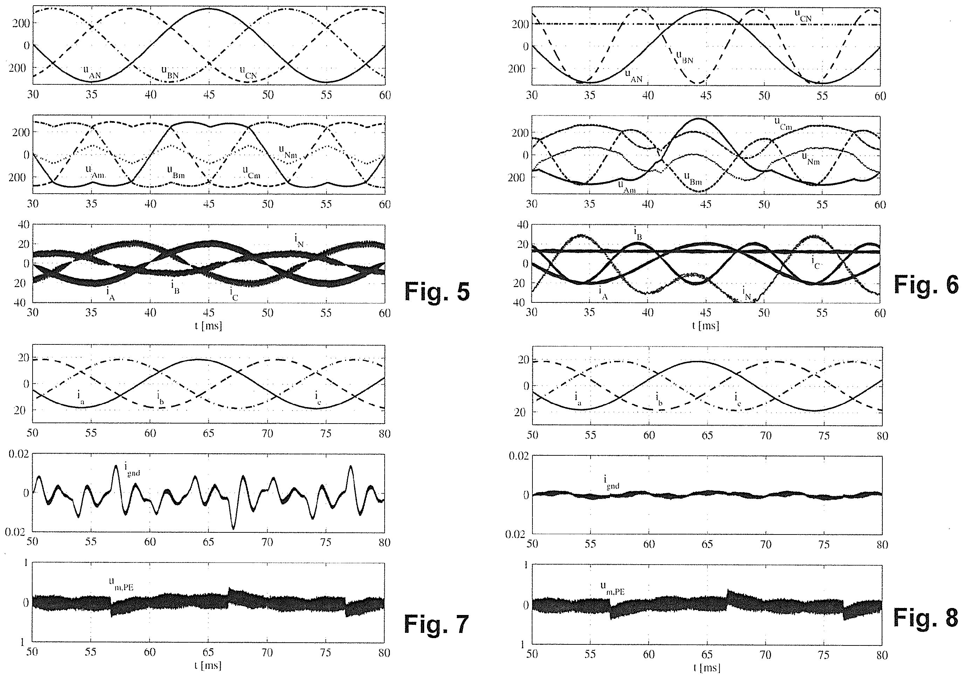

**Fig. 5-6** show simulated trajectories of voltages and currents for unbalanced loads and unbalanced voltages. The star point of the three-phase load is connected to N. In each figure, the trajectories are, from top to bottom,

- the output voltages with reference to the neutral point ($U_{AN}$, $U_{BN}$, $U_{CN}$)
- the output voltages with reference to the midpoint ($U_{Am}$, $U_{Bm}$, $U_{Cm}$, $U_{Nm}$)
- the output currents ($i_A$, $i_B$, $i_C$, $i_N$)

**Fig. 5** shows an unbalanced load. The unbalanced load presents a 200% higher resistance in phase C. **Fig 6** shows a nonlinear load with unbalanced voltages (a diode bridge rectifier). Furthermore, each phase is controlled to work as an independent source: phase A with a 50Hz sinusoidal reference, phase B with a 100Hz sinusoidal reference and phase C as a DC source.

**Fig. 7-8** show the effect of ground current control: in both cases, the converter operates with balanced three-phase output voltages and unbalanced load. The unbalanced load presents a 200% higher resistance in phase C. In each figure, the trajectories are, from top to bottom,

- input currents ($i_a$, $i_b$, $i_c$)
- ground current ($i_{gnd}$)
- midpoint voltage ($u_{m,PE}$)

**Fig. 7** shows the trajectories without ground current control.
**Fig. 8** shows the trajectories with ground current control.

While the invention has been described in present embodiments, it is distinctly understood that the invention is not limited thereto, but may be otherwise variously embodied and practised within the scope of the claims.

REFERENCES

[1] N. Kim, S.-Y. Kim, H.-G. Lee, C. Hwang, G.-H. Kim, H.-R. Seo, M. Park, and I.-K. Yu, "Design of a grid-simulator for a transient analysis of grid-connected renewable energy system," in International Conference on Electrical Machines and Systems (ICEMS), Oct.2010, pp. 633 - 637.

[2] R. Lohde and F. Fuchs, "Laboratory type PWM grid emulator for generating disturbed voltages for testing grid connected devices," in 13th European Conference on Power Electronics and Applications (EPE '09), Sept. 2009, pp. 1 -9.

[3] O. Craciun, A. Florescu, S. Bacha, I. Munteanu, and A. Bratcu, "Hardware-in-the-loop testing of PV control systems using RT-Labsimulator," in 14th International Power Electronics and Motion Control Conference (EPE/PEMC), Sept. 2010, pp. S2-1 -S2-6.

[4] R. Zhang, D. Boroyevich, V. Prasad, H.-C. Mao, F. Lee, and S. Dubovsky, "A three-phase inverter with a neutral leg with space vector modulation," in Proceedings of the 12th Applied Power Electronics Conference and Exposition (APEC'97), vol. 2, Feb. 1997,pp. 857 - 863.

[5] S. El-Barbari and W. Hofmann, "Control of a 4 leg inverter for standalone photovoltaic systems," in Proceedings of the 4th IEEE International Conference on Power Electronics and Drive Systems, vol. 1, Oct. 2001, pp. 348 - 354.

[6] M. Ryan, R. De Doncker, and R. Lorenz, "Decoupled control of a four-leg inverter via a new 4x4 transformation matrix," IEEE Transactions on Power Electronics, vol. 16, no. 5, pp. 694 - 701, Sept. 2001.

[7] M. Ryan, "Analysis, modeling and control of three-phase, four-wire sine wave inverter systems," Ph.D. dissertation, University of Wisconsin - Madison, 1997.

[8] J.-H. Kim and S.-K. Sul, "A carrier-based PWM method for three-phase four-leg voltage source converters," IEEE Transactions on Power Electronics, vol. 19, no. 1, pp. 66 - 75, Jan. 2004.

[9] J. Ai-juan, L. Hang-tian, and L. Shao-long, "A new matrix type three-phase four-wire power electronic transformer," in Proceedings of the 37th IEEE Power Electronics Specialists Conference (PESC '06), June 2006, pp. 1 - 6.

[10]R. Zhang, V. Prasad, D. Boroyevich, and F. Lee, "Three-dimensional space vector modulation for four-leg voltage-source converters, "IEEE Transactions on Power Electronics, vol. 17, no. 3, pp. 314 - 326, May 2002.

[11]R. Nasiri and A. Radan, "Pole-placement control strategy for 4-leg voltage-source inverters," in 1st Power Electronic Drive Systems Technologies Conference (PEDSTC), Feb. 2010, pp. 74 - 79.

[12]Z. Ye, D. Boroyevich, J.-Y. Choi, and F. Lee, "Control of circulating current in two parallel three-phase boost rectifiers," IEEE Transactions on Power Electronics, vol. 17, no. 5, pp. 609 - 615, Sept. 2002.

[13]C.-T. Pan and Y.-H. Liao, "Modeling and coordinate control of circulating currents in parallel three-phase boost rectifiers," IEEE Transactions on Industrial Electronics, vol. 54, no. 2, pp. 825 - 838, April 2007.

[14] -, "Modeling and control of circulating currents for parallel three-phase boost rectifiers with different load sharing," IEEE Transactions on Industrial Electronics, vol. 55, no. 7, pp. 2776 - 2785, July 2008.

[15]M. Baumann and J. Kolar, "Parallel connection of two three-phase three-switch buck-type unity-power-factor rectifier systems with dc-link current balancing," IEEE Transactions on Industrial Electronics, vol. 54, no. 6, pp. 3042 - 3053, Dec. 2007.

[16] H. Shan, Y. Zhang, M. Yu, Y. Kang, Y. Liu, M. Yin, and H. Li, "The novel strategy of restraining circulating currents in distributed logical-control on parallel inverter system," in Proceedings of the International Conference on Electrical Machines and Systems (ICEMS 2009), Nov. 2009, pp. 1 - 5.

[17]S. Ji, Y. Yong, and Q. Chunqing, "Control of circulating current for direct parallel grid-connected inverters in photovoltaic power generation," in Proceedings of the International Conference on Mechatronics and Automation (ICMA 2009), Aug. 2009, pp. 3805 -3810.

**Claims**

**1.** A **method for controlling** a multiphase AC power converter, wherein the power converter comprises

• a multiphase primary stage for exchanging electrical energy between a multiphase voltage source and a DC link ($C_{DC,p}$, $C_{DC,n}$);
• an input filter ($L_{dm,1}$, $C_{dm,1}$) arranged between the primary stage and input terminals (a, b, c) connecting the power converter to the multiphase voltage source;
• a multiphase secondary stage for exchanging electrical energy between the DC link and phases of a multiphase load, this secondary stage comprising one bridge leg for each of the phases of the load and an additional bridge leg for a neutral point ($N$) of the load;
• the input filter ($L_{dm,1}$, $C_{dm,1}$) comprising an input filter star point ($y$) connected to a midpoint (m) of the DC link via a connection capacitance ($C_{my}$);

wherein the method comprises the following steps for controlling a ground current ($i_{gnd}$) flowing into the power converter:

• an outer controller controlling the ground current ($i_{gnd}$) to a reference value ($i^*_{gnd}$) by generating a reference value ($u^*_{my}$) for a voltage across the connection capacitance ($C_{my}$);
• an inner controller controlling the voltage ($u_{my}$) across the connection capacitance ($C_{my}$) to its reference value ($u^*_{my}$) by generating a reference value ($i^*_{zs}$) for a zero sequence current flowing through the connection capacitance ($C_{my}$);
• a zero sequence current controller controlling the zero sequence current ($i_{zs}$) to its reference value ($i^*_{zs}$).

2. The method of claim 1, wherein the power converter comprises an output filter ($L_{DM,1}$, $C_{DM,1}$, $L_{DM,2}$, $C_{DM,2}$) arranged between the secondary stage and output terminals ($A$, $B$, $C$) that connect the power converter to the load, including the neutral point ($N$) of the load, and wherein a star point of the output filter is connected to the midpoint ($m$) of the DC link; the method comprising the step of

• a feedforward circuit adding a potential ($U_{Nm}$) of the secondary stage neutral point to the reference value generated by the outer controller before inputting it as a reference value ($u^*_{my}$) to the inner controller.

3. The method of claim 1 or claim 2, wherein the voltage source is a three phase system and the load comprises three phase connections and one neutral point connection ($N$) to the secondary stage of the power converter.

4. A **multiphase AC power converter,** wherein the power converter comprises

• a multiphase primary stage for exchanging electrical energy between a multiphase voltage source and a DC link ($C_{DC,p}$, $C_{DC,n}$);
• an input filter ($L_{dm,1}$, $C_{dm,1}$) arranged between the primary stage and input terminals connecting the power converter to the multiphase voltage source;
• a multiphase secondary stage for exchanging electrical energy between the DC link ($C_{DC,p}$, $C_{DC,n}$) and phases of a multiphase load, this secondary stage comprising one bridge leg for each of the phases of the load and an additional bridge leg for a neutral point ($N$) of the load;
• the input filter ($L_{dm,1}$, $C_{dm,1}$) comprising an input filter star point($y$);
• an output filter arranged between the secondary stage and output terminals that connect the power converter to the load, and
• wherein a star point of the output filter is connected to the midpoint ($m$) of the DC link,

**characterised in that** the input filter star point ($y$) is connected to the midpoint ($m$) of the DC link via a connection capacitance ($C_{my}$) and **in that** the multiphase AC power converter further comprises a controller for controlling ground loop currents, wherein the controller comprises the following units implemented in hard- and/or software for controlling a ground current ($i_{gnd}$) flowing into the power converter:

• an outer controller arranged to control the ground current ($i_{gnd}$) to a reference value ($i^*_{gnd}$) by generating a reference value ($u^*_{my}$) for a voltage across the connection capacitance ($C_{my}$);
• an inner controller arranged to control the voltage ($u_{my}$) across the connection capacitance ($C_{my}$) to its reference value ($u^*_{my}$) by generating a reference value ($i^*_{zs}$) for a zero sequence current flowing into the connection capacitance ($C_{my}$);
• a zero sequence current controller arranged to control the zero sequence current ($i_{zs}$) to its reference value ($i^*_{zs}$).

5. The multiphase AC power converter of claim 4, wherein the output filter, including filter elements for the neutral point, is a symmetric filter.

6. The multiphase AC power converter of claim 4, comprising a controller for the potential ($U_{Nm}$) at the neutral point of the secondary stage that maximises the voltage range for the other three output phases.

7. The multiphase AC power converter of claim 4 or 6, comprising a feedforward circuit arranged to add a potential ($U_{Nm}$) of the neutral point of the secondary stage to the reference value generated by the outer controller before inputting it as a reference value ($u^*_{my}$) to the inner controller.

## Patentansprüche

1. **Verfahren zum Regeln** eines mehrphasigen Wechselstrom-Leistungswandlers, wobei der Leistungswandler Folgendes umfasst:

   • eine mehrphasige Primärstufe zum Austauschen von elektrischer Energie zwischen einer mehrphasigen Spannungsquelle und einem Gleichspannungszwischenkreis ($C_{DC,p}$, $C_{DC,n}$);
   • ein Eingangsfilter ($L_{dm,1}$, $C_{dm,1}$), das zwischen der Primärstufe und Eingangsanschlüssen (a, b, c), die den Leistungswandler mit der mehrphasigen Spannungsquelle verbinden, angeordnet ist;
   • eine mehrphasige Sekundärstufe zum Austauschen von elektrischer Energie zwischen dem Gleichspannungszwischenkreis und Phasen einer mehrphasigen Last, wobei diese Sekundärstufe einen Brückenabschnitt für jede der Phasen der Last und einen zusätzlichen Brückenabschnitt für einen Neutralpunkt ($N$) der Last umfasst;
   • das Eingangsfilter ($L_{dm,1}$, $C_{dm,1}$), das einen Eingangsfiltersternpunkt ($y$), der über eine Verbindungskapazität ($C_{my}$) mit einem Mittelpunkt ($m$) des Gleichspannungszwischenkreises verbunden ist, umfasst;

   wobei das Verfahren die folgenden Schritte zum Regeln eines in den Leistungswandler fließenden Massestroms ($i_{gnd}$) umfasst:

   • eine äußere Regelung, die den Massestrom ($i_{gnd}$) auf einem Referenzwert ($i^*_{gnd}$) regelt, indem ein Referenzwert ($u^*_{my}$) für eine Spannung über die Verbindungskapazität ($C_{my}$) erzeugt wird;
   • eine innere Regelung, die die Spannung ($u_{my}$) über die Verbindungskapazität ($C_{my}$) auf ihren Referenzwert ($u^*_{my}$) regelt, indem ein Referenzwert ($i^*_{zs}$) für einen durch die Verbindungskapazität ($C_{my}$) fließenden Nullsequenzstrom erzeugt wird;
   • eine Nullsequenzstromregelung, die den Nullsequenzstrom ($i_{zs}$) auf seinen Referenzwert ($i^*_{zs}$) regelt.

2. Verfahren nach Anspruch 1, wobei der Leistungswandler ein Ausgangsfilter ($L_{DM,1}$, $C_{DM,1}$, $L_{DM,2}$, $C_{DM,2}$) umfasst, das zwischen der Sekundärstufe und Ausgangsanschlüssen (A, B, C), die den Leistungswandler mit der Last einschließlich des Neutralpunkts ($N$) der Last verbinden, angeordnet ist, und wobei ein Sternpunkt des Ausgangsfilters mit dem Mittelpunkt ($m$) des Gleichspannungszwischenkreises verbunden ist; wobei das Verfahren den folgenden Schritt umfasst:

   • eine Vorwärtskopplungsschaltung, die ein Potential ($U_{Nm}$) des Sekundärstufen-Neutralpunkts zum Referenzwert, der durch die äußere Regelung erzeugt wird, hinzufügt, bevor sie es als einen Referenzwert ($u^*_{my}$) in die innere Regelung einfügt.

3. Verfahren nach Anspruch 1 oder Anspruch 2, wobei die Spannungsquelle ein Dreiphasensystem ist und die Last Dreiphasenverbindungen und eine Neutralpunktverbindung ($N$) zur Sekundärstufe des Leistungswandlers umfasst.

4. **Mehrphasiger Wechselstrom-Leistungswandler,** wobei der Leistungswandler Folgendes umfasst:

   • eine mehrphasige Primärstufe zum Austauschen von elektrischer Energie zwischen einer mehrphasigen Spannungsquelle und einem Gleichspannungszwischenkreis ($C_{DC,p}$, $C_{DC,n}$);
   • ein Eingangsfilter ($L_{dm,1}$, $C_{dm,1}$), das zwischen der Primärstufe und Eingangsanschlüssen, die den Leistungswandler mit der mehrphasigen Spannungsquelle verbinden, angeordnet ist;
   • eine mehrphasige Sekundärstufe zum Austauschen von elektrischer Energie zwischen dem Gleichspannungszwischenkreis ($C_{DC,p}$, $C_{DC,n}$) und Phasen einer mehrphasigen Last, wobei diese Sekundärstufe einen Brückenabschnitt für jede der Phasen der Last und einen zusätzlichen Brückenabschnitt für einen Neutralpunkt ($N$) der Last umfasst;
   • das Eingangsfilter ($L_{dm,1}$, $C_{dm,1}$), das einen Eingangsfiltersternpunkt ($y$) umfasst;
   • ein Ausgangsfilter, das zwischen der Sekundärstufe und Ausgangsanschlüssen, die den Leistungswandler mit der Last verbinden, angeordnet ist und
   • wobei ein Sternpunkt des Ausgangsfilters mit dem Mittelpunkt ($m$) des Gleichspannungszwischenkreises verbunden ist,

**dadurch gekennzeichnet, dass** der Eingangsfiltersternpunkt (*y*) über eine Verbindungskapazität ($C_{my}$) mit dem Mittelpunkt (*m*) des Gleichspannungszwischenkreises verbunden ist, und dass der mehrphasige Wechselstrom-Leistungswandler ferner eine Regelung zum Regeln von Masseschleifenströmen umfasst, wobei die Regelung die folgenden Einheiten umfasst, die in Hard- und/oder Software zum Regeln eines in den Leistungswandler fließenden Massestroms ($i_{gnd}$) implementiert sind:

- eine äußere Regelung, die zum Regeln des Massestroms ($i_{gnd}$) auf einen Referenzwert ($i^*_{gnd}$) angeordnet ist, indem ein Referenzwert ($u^*_{my}$) für eine Spannung über die Verbindungskapazität ($C_{my}$) erzeugt wird;
- eine innere Regelung, die zum Regeln der Spannung ($u_{my}$) über die Verbindungskapazität ($C_{my}$) auf ihren Referenzwert ($u^*_{my}$) angeordnet ist, indem ein Referenzwert ($i^*_{zs}$) für einen in die Verbindungskapazität ($C_{my}$) fließenden Nullsequenzstrom erzeugt wird;
- eine Nullsequenzstromregelung, die zum Regeln des Nullsequenzstroms ($i_{zs}$) auf seinen Referenzwert ($i^*_{zs}$) angeordnet ist.

5. Mehrphasiger Wechselstrom-Leistungswandler nach Anspruch 4, wobei das Ausgangsfilter, einschließlich von Filterelementen für den Neutralpunkt, ein symmetrisches Filter ist.

6. Mehrphasiger Wechselstrom-Leistungswandler nach Anspruch 4, der eine Regelung für das Potential ($U_{Nm}$) am Neutralpunkt der Sekundärstufe umfasst, die den Spannungsbereich für die anderen drei Ausgangsphasen maximiert.

7. Mehrphasiger Wechselstrom-Leistungswandler nach Anspruch 4 oder 6, der eine Vorsteuerung umfasst, die angeordnet ist, ein Potential ($U_{Nm}$) des Neutralpunkts der Sekundärstufe zum Referenzwert, der durch die äußere Regelung erzeugt wird, hinzuzufügen, bevor sie es als einen Referenzwert ($u^*_{my}$) in die innere Regelung einfügt.

## Revendications

1. **Procédé pour réguler** un convertisseur de puissance de courant alternatif multiphase, dans lequel le convertisseur de puissance comprend :

   - un étage primaire multiphase pour échanger de l'énergie électrique entre une source de tension multiphase et une liaison continue ($C_{DC,p}$, $C_{DC,n}$);
   - un filtre d'entrée ($L_{dm,1}$, $C_{dm,1}$) disposé entre l'étage primaire et des bornes d'entrée (a, b, c) raccordant le convertisseur de puissance à la source de tension multiphase ;
   - un étage secondaire multiphase pour échanger de l'énergie électrique entre la liaison continue et des phases d'une charge multiphase, cet étage secondaire comprenant une jambe de pont pour chaque phase de la charge et une jambe de pont supplémentaire pour un point neutre (*N*) de la charge ;
   - le filtre d'entrée ($L_{dm,1}$, $C_{dm,1}$) comprenant un point étoile de filtre d'entrée (*y*) raccordé à un point intermédiaire (*m*) de la liaison continue par le biais d'une capacité de connexion ($C_{my}$) ;

   dans lequel le procédé comprend les étapes suivantes consistant à réguler un courant à la terre ($i_{gnd}$) circulant dans le convertisseur de puissance :

   - un dispositif de régulation externe régulant le courant à la terre ($i_{gnd}$) à une valeur de référence ($i^*_{gnd}$) en générant une valeur de référence ($u^*_{my}$) pour une tension à travers la capacité de connexion ($C_{my}$) ;
   - un dispositif de régulation interne régulant la tension ($u_{my}$) à travers la capacité de connexion ($C_{my}$) à sa valeur de référence ($u^*_{my}$) en générant une valeur de référence ($i^*_{zs}$) pour un courant de séquence nulle circulant à travers la capacité de connexion ($C_{my}$) ;
   - un dispositif de régulation de courant de séquence nulle régulant le courant de séquence nulle ($i_{zs}$) à sa valeur de référence ($i^*_{zs}$).

2. Procédé selon la revendication 1, dans lequel le convertisseur de puissance comprend un filtre de sortie ($L_{DM,1}$, $C_{DM,1}$, $L_{DM,2}$, $C_{DM,2}$) disposé entre l'étage secondaire et des bornes de sortie (A, B, C) qui raccordent le convertisseur de puissance à la charge, comprenant le point neutre (*N*) de la charge et dans lequel un point étoile du filtre de sortie est raccordé au point intermédiaire (*m*) de la liaison continue ; le procédé comprenant l'étape suivants :

   - un circuit d'action directe ajoutant un potentiel ($U_{Nm}$) du point neutre de l'étage secondaire à la valeur de référence générée par le dispositif de régulation externe avant de l'entrer comme valeur de référence ($u^*_{my}$) dans le dispositif de régulation interne.

3. Procédé selon la revendication 1 ou la revendication 2, dans lequel la source de tension est un système triphasé et la charge comprend trois connexions de phase et une connexion de point neutre (N) à l'étage secondaire du convertisseur de puissance.

4. **Convertisseur de puissance de courant alternatif multiphase,** dans lequel le convertisseur de puissance comprend :

• un étage primaire multiphase pour échanger de l'énergie électrique entre une source de tension multiphase et une liaison continue ($C_{DC,p}$, $C_{DC,n}$) ;
• un filtre d'entrée ($L_{dm,1}$, $C_{dm,1}$) disposé entre l'étage primaire et des bornes d'entrée raccordant le convertisseur de puissance à la source de tension multiphase ;
• un étage secondaire multiphase pour échanger de l'énergie électrique entre la liaison continue ($C_{DC,p}$, $C_{DC,n}$) et des phases d'une charge multiphase, cet étage secondaire comprenant une jambe de pont pour chaque phase de la charge et une jambe de pont supplémentaire pour un point neutre (N) de la charge ;
• le filtre d'entrée ($L_{dm,1}$, $C_{dm,1}$) comprenant un point étoile de filtre d'entrée (y) ;
• un filtre de sortie disposé entre l'étage secondaire et des bornes de sortie qui raccordent le convertisseur de puissance à la charge, et
• dans lequel un point étoile du filtre de sortie est raccordé au point intermédiaire (m) de la liaison continue,
• **caractérisé en ce que** le point étoile de filtre d'entrée (y) est raccordé au point intermédiaire (m) de la liaison continue par le biais d'une capacité de connexion ($C_{my}$) et **en ce que** le convertisseur de puissance de courant alternatif multiphase comprend en outre un dispositif de régulation pour réguler des courants de boucle à la terre, dans lequel le dispositif de régulation comprend les unités suivantes mises en oeuvre dans un matériel et/ou un logiciel pour réguler un courant à la terre ($i_{gnd}$) circulant dans le convertisseur de puissance :

• un dispositif de régulation externe conçu pour réguler le courant à la terre ($i_{gnd}$) à une valeur de référence ($i^*_{gnd}$) en générant une valeur de référence ($u^*_{my}$) pour une tension à travers la capacité de connexion ($C_{my}$) ;
• un dispositif de régulation interne conçu pour réguler la tension ($u_{my}$) à travers la capacité de connexion ($C_{my}$) à sa valeur de référence ($u^*_{my}$) en générant une valeur de référence ($i^*_{zs}$) pour un courant de séquence nulle circulant à travers la capacité de connexion ($C_{my}$) ;
• un dispositif de régulation de courant de séquence nulle conçu pour réguler le courant de séquence nulle ($i_{zs}$) à sa valeur de référence ($i^*_{zs}$).

5. Convertisseur de puissance de courant alternatif multiphase selon la revendication 4, dans lequel le filtre de sortie, comprenant des éléments filtrants pour le point neutre, est un filtre symétrique.

6. Convertisseur de puissance de courant alternatif multiphase selon la revendication 4, comprenant un dispositif de régulation pour le potentiel ($U_{Nm}$) au point neutre de l'étage secondaire qui maximise la plage de tension pour les trois autres phases de sortie.

7. Convertisseur de puissance de courant alternatif multiphase selon la revendication 4 ou 6, comprenant un circuit d'action directe conçu pour ajouter un potentiel ($U_{Nm}$) du point neutre de l'étage secondaire à la valeur de référence générée par le dispositif de régulation externe avant de l'entrer comme valeur de référence ($u^*_{my}$) dans le dispositif de régulation interne.

Fig. 1a

Fig. 1a

Fig. 1b

Fig. 2a

Fig. 2b

EP 2 814 164 B1

**Fig. 2a**

$u^*_{AN}$
$u^*_{BN}$
$u^*_{CN}$

min/max

$u^*_{Nm}$

$i^*_A$
$u^*_{AN}$
$u_{AN}$
$i_{A,out}$

$u^*_{Nm}$
$u_{A'm}$
$i_A$

$L_{DM,1}$
$L_{DM,2}$
$R_D$  $L_D$

A
B
C
N

$i_B$  $i_{B,out}$
$i_C$  $i_{C,out}$
$i_N$  $i_{N,out}$

$C_{DM,1}$  $C_{DM,2}$
m

$u_{Nm}$
$u^*_{Nm}$
$i^*_N$

$u_{N'm}$

$i_{A,out} + i_{B,out} + i_{C,out}$

**Fig. 2b**

**Fig. 3**

$L_{cm,2}$  $i_{gnd}$  $L_{dm,1}/3$  $L_{eq}$  $i_{zs}$  m  N

$C_{eq,2}$  $u_{my}$  $C_{eq,1}$  $u_{0m}$  $u_{Nm}$

Fig. 4

Fig. 5

Fig. 6

Fig. 7

Fig. 8

## REFERENCES CITED IN THE DESCRIPTION

### Patent documents cited in the description

- US 2005140142 A1

### Non-patent literature cited in the description

- **N. KIM ; S.-Y. KIM ; H.-G. LEE ; C. HWANG ; G.-H. KIM ; H.-R. SEO ; M. PARK ; I.-K. YU.** Design of a grid-simulator for a transient analysis of grid-connected renewable energy system. *International Conference on Electrical Machines and Systems (ICEMS),* October 2010, 633-637
- **R. LOHDE ; F. FUCHS.** Laboratory type PWM grid emulator for generating disturbed voltages for testing grid connected devices. *13th European Conference on Power Electronics and Applications (EPE '09),* September 2009, 1-9
- **O. CRACIUN ; A. FLORESCU ; S. BACHA ; I. MUNTEANU ; A. BRATCU.** Hardware-in-the-loop testing of PV control systems using RT-Labsimulator. *International Power Electronics and Motion Control Conference (EPE/PEMC),* September 2010, S2-1, S2-6
- **R. ZHANG ; D. BOROYEVICH ; V. PRASAD ; H.-C. MAO ; F. LEE ; S. DUBOVSKY.** A three-phase inverter with a neutral leg with space vector modulation. *Proceedings of the 12th Applied Power Electronics Conference and Exposition (APEC'97),* 02 February 1997, 857-863
- **S. EL-BARBARI ; W. HOFMANN.** Control of a 4 leg inverter for standalone photovoltaic systems. *Proceedings of the 4th IEEE International Conference on Power Electronics and Drive Systems,* 01 October 2001, 348-354
- **M. RYAN ; R. DE DONCKER ; R. LORENZ.** Decoupled control of a four-leg inverter via a new 4x4 transformation matrix. *IEEE Transactions on Power Electronics,* September 2001, vol. 16 (5), 694-701
- Analysis, modeling and control of three-phase, four-wire sine wave inverter systems. **M. RYAN.** Ph.D. dissertation. University of Wisconsin, 1997
- **J.-H. KIM ; S.-K. SUL.** A carrier-based PWM method for three-phase four-leg voltage source converters. *IEEE Transactions on Power Electronics,* January 2004, vol. 19 (1), 66-75
- **J. AI-JUAN ; L. HANG-TIAN ; L. SHAO-LONG.** A new matrix type three-phase four-wire power electronic transformer. *Proceedings of the 37th IEEE Power Electronics Specialists Conference (PESC '06),* June 2006, 1-6
- **R. ZHANG ; V. PRASAD ; D. BOROYEVICH ; F. LEE.** Three-dimensional space vector modulation for four-leg voltage-source converters. *IEEE Transactions on Power Electronics,* May 2002, vol. 17 (3), 314-326
- **R. NASIRI ; A. RADAN.** Pole-placement control strategy for 4-leg voltage-source inverters. *1st Power Electronic Drive Systems Technologies Conference (PEDSTC),* February 2010, 74-79
- **Z. YE ; D. BOROYEVICH ; J.-Y. CHOI ; F. LEE.** Control of circulating current in two parallel three-phase boost rectifiers. *IEEE Transactions on Power Electronics,* September 2002, vol. 17 (5), 609-615
- **C.-T. PAN ; Y.-H. LIAO.** Modeling and coordinate control of circulating currents in parallel three-phase boost rectifiers. *IEEE Transactions on Industrial Electronics,* April 2007, vol. 54 (2), 825-838
- Modeling and control of circulating currents for parallel three-phase boost rectifiers with different load sharing. *IEEE Transactions on Industrial Electronics,* July 2008, vol. 55 (7), 2776-2785
- **M. BAUMANN ; J. KOLAR.** Parallel connection of two three-phase three-switch buck-type unity-power-factor rectifier systems with dc-link current balancing. *IEEE Transactions on Industrial Electronics,* December 2007, vol. 54 (6), 3042-3053
- **H. SHAN ; Y. ZHANG ; M. YU ; Y. KANG ; Y. LIU ; M. YIN ; H. LI.** The novel strategy of restraining circulating currents in distributed logical-control on parallel inverter system. *Proceedings of the International Conference on Electrical Machines and Systems (ICEMS 2009),* November 2009, 1-5
- **S. JI ; Y. YONG ; Q. CHUNQING.** Control of circulating current for direct parallel grid-connected inverters in photovoltaic power generation. *Proceedings of the International Conference on Mechatronics and Automation (ICMA 2009),* August 2009, 3805-3810